**Europäisches Patentamt**

**European Patent Office**

**Office européen des brevets**

(11) Veröffentlichungsnummer: **0 073 356**
**A1**

# (12) EUROPÄISCHE PATENTANMELDUNG

(21) Anmeldenummer: **82107038.0**

(22) Anmeldetag: **04.08.82**

(51) Int. Cl.³: **B 29 D 23/20**

(30) Priorität: **01.09.81 DE 3134602**

(43) Veröffentlichungstag der Anmeldung: **09.03.83** Patentblatt 83/10

(84) Benannte Vertragsstaaten: **AT BE CH DE FR GB IT LI LU NL SE**

(71) Anmelder: **STAHLGRUBER Otto Gruber GmbH & Co., Einsteinstrasse 130, D-8000 München 80 (DE)**

(72) Erfinder: **Gottauf, Georg, Elektrastrasse 56, D-8000 München 81 (DE)**

(74) Vertreter: **Huss, Carl-Hans, Dipl.-Ing. et al, Rathausstrasse 14, D-8100 Garmisch-Partenkirchen (DE)**

(54) **Verfahren zur Herstellung einer Tube aus Kunststoff mit zugehöriger Verschlusskappe und Vorrichtung zur Durchführung desselben.**

(57) Um den Vorgang der Herstellung einer genauen Passung zwischen Außengewinde am Gewindehals einer Tube aus Kunststoff und Innengewinde an der zugehörigen Verschlußkappe zu vereinfachen und gegebenenfalls auch einen genau in die Entleerungsöffnung der Tube passenden Dichtkegel zu erzeugen, wird zunächst in einer Spritzformeinheit (1) ein Tubenkörper gespritzt, sodann nach dem Spritzen der den Gewindehals herstellende Formteil (2, 3, 4) entfernt und anstelle dieses ein Formteil (15) für das Spritzen der Verschlußkappe (25) auf die Stirnfläche (13) des Formteils (5) für den Tubenkörper aufgesetzt. In dem Formnest (16) des Kappenformteils (15) bildet der vorher gespritzte Gewindehals (10) des Tubenkörpers und ein Teil des konischen Zwischenstücks (9) desselben den Kern, um den herum die Verschlußkappe (25) gespritzt wird.

G 560-Hs
Garmisch-Partenkirchen,
16. Juli 1982
Hs:H

STAHLGRUBER
Otto Gruber GmbH & Co.
Einsteinstraße 130
D-8000   München   80

Verfahren zur Herstellung einer Tube aus Kunststoff mit zugehöriger Verschlußkappe und Vorrichtung zur Durchführung desselben

Die Erfindung richtet sich auf die Herstellung einer Tube aus Kunststoff mit zugehöriger, auf
ihren Gewindehals aufschraubbaren Verschlußkappe.

Bei bekannten Tubenkonstruktionen, gleich ob
aus Metall oder Kunststoff, gibt es erfahrungsgemäß
häufig Schwierigkeiten mit der Passung der Verschlußkappen, insbesondere bei solchen Tuben, deren Inhalt
flüchtige Bestandteile, z.B. Lösungsmittel enthält.
Eine unvollkommene Dichtung des Tubenverschlusses
in Form einer Schraubkappe führt in kurzer Zeit zu
einem Lösungsmittelverlust, wodurch der Tubeninhalt
unbrauchbar wird. Auch bei Tuben, die für Lagerung
und Transport vollkommen geschlossen sind und deren

- 2 -

vor dem ersten Gebrauch durch einen an der Schraub-kappe befindlichen Kegel aufgestochen werden müssen, ist es beim Schließen häufig schwierig, den Verschluß zentrisch gerade aufzusetzen. Weil Gewinde nicht zu Gewinde paßt, muß er mehrmals auf- und zugedreht werden.

Bei einer Massenproduktion, wie sie für Tuben zutrifft, ist das Zusammenpassen von Kappenverschluß und Gewindehals einer Tube aus Kunststoff schon deshalb ein Problem, weil durch die getrennte Herstellung von Tuben und Verschlußkappen immer viele Werkzeuge gleichzeitig im Einsatz sind, und es technisch kaum möglich ist, alle Werkzeuge zueinander genau passend zu fertigen. Außerdem muß bisher zumindest der Gewindehals einer Tube in einer geteilten Form gefertigt werden, wodurch unvermeidbar an der Formtrennstelle ein mehr oder weniger starker Grat entsteht, der entweder umständlich und aufwendig nachträglich entfernt werden oder in Kauf genommen werden muß. Nach einer gewissen Spritzzeit und auch bei den geringsten Reparaturen treten Veränderungen an den Spritzformen auf, wodurch die Passung zwischen Gewindehals und Verschlußkappe noch problematischer wird.

Außerdem wurde als Nachteil empfunden, daß das Herstellen einer Verschlußkappe mit Innengewinde nur in einem Werkzeug möglich ist, aus dem nach dem Spritzvorgang der Gewindekern motorisch herausgedreht werden muß.

Nach dem Füllen der Tube und dem Verschweißen des Tubenendes war bisher ein weiterer Arbeitsgang erforderlich, um die Verschlußkappe aufzuschrauben.

Bei einer wenigstens für Lagerung und Transport sogenannten verlustsicheren Tube mußte dann der Benutzer vor dem ersten Gebrauch die Tube, deren Inhalt unter mehr oder weniger großem Innendruck steht, aufstechen, ein Vorgang, bei dem erfahrungsgemäß häufig ungewollt und ohne daß man auf den Tubenkörper drückt, ein Teil des Tubeninhalts austritt.

Um diese Nachteile zu beheben, ist es durch die GB-PS 1 010 541 bekanntgeworden, einen aus Kunststoff gespritzten und einem Vorrat entnommenen Tubenkörper auf einen Stützkörper aus Metall zu stecken, dann auf das konische Übergangsstück zwischen Rohr und Gewindehals des Tubenkörpers eine Spritzform aufzusetzen und den Gewindehals des Tubenkörpers mit einer Verschlußkappe zu umspritzen. Hierbei wird der Gewindehals der Kern der Spritzform für die Verschlußkappe.

Diese Methode hat aber zunächst den Nachteil, daß es praktisch unmöglich ist, so genau dimensionierte Stützkörper herzustellen, daß die dem Vorrat entnommenen Tubenkörper einerseits vor dem Umspritzen ihres Gewindehalses leicht genug aufgesteckt und andererseits nach gespritzter Verschlußkappe auch wieder leicht abgezogen werden können. Wenn der Außendurchmesser des Stützkörpers im Verhältnis zum Innendurchmesser des Rohrteils des Tubenkörpers zu gering ist, kann der Tubenkörper zwar leicht aufgesteckt werden, aber er sitzt dann nicht genau zentrisch, wenn die Spritzform mit Druck aufgesetzt wird. Wenn nach Wegnahme der Spritzform der Tubenkörper wieder entlastet wird, können, von schiefen Gewindehälsen abgesehen, Undichtigkeiten zwischen dem

– 4 –

Innengewinde der Verschlußkappe und dem Außengewinde des Gewindehalses auftreten. Besitzt dagegen der Außendurchmesser des Stützkörpers eine zu geringe Untertoleranz im Verhältnis zum Rohr des Tubenkörpers, so ist nicht nur das Aufstecken, sondern auch das Abziehen schwierig, weil sich das Rohr auf dem Stützkörper gewissermaßen festsaugt.

Außerdem ist bei dieser vorbekannten Methode nachteilig, daß sich die Spritzform für die Herstellung der Verschlußkappe auf dem Kunststoff des Zwischenstückes zwischen dem Rohr und dem Gewindehals des Tubenkörpers abstützt. Auch das führt zu einem unstabilen Sitz der Spritzform und damit zur Gefahr, daß beim Umspritzen des Gewindehalses die Achse des Tubenkörpers und die der Verschlußkappe nicht genau übereinstimmen. Da die Spritzform wegen des hohen Spritzdruckes mit hohem Druck auf die Tubenschulter aufgepreßt werden muß, kann diese auch beschädigt werden.

Demnach lag der Erfindung die Aufgabe zugrunde, ein Verfahren zur Herstellung einer Tube aus Kunststoff mit einem Gewindehals und einem Verschluß in Form einer zur jeweiligen Tube zugehörigen Schraubkappe zu schaffen, bei dem wenig Arbeitsgänge erforderlich sind und in schneller Folge hintereinander ablaufen können, bei dem das Innengewinde der Verschlußkappe trotz genauer Passung zum Außengewinde des Gewindehalses sehr einfach herstellbar ist und die Gefahr einer Beschädigung eines Teils des Tubenkörpers oder einer Überbeanspruchung des Kunststoffs des Tubenkörpers ausgeschlossen ist.

Diese Aufgabe löst die Erfindung mit den in den Ansprüchen definierten Merkmalen.

Die Erfindung ist in der Zeichnung an einem Ausführungsbeispiel veranschaulicht und mit diesem nachfolgend beschrieben. Es stellen dar:

Fig. 1 bis 4 eine Spritzform zur Herstellung einer Tube aus Kunststoff mit Verschlußkappe im Vertikalschnitt in vier aufeinanderfolgenden Arbeitsstellungen zur Darstellung des Verfahrens nach der Erfindung;

Fig. 5 eine erfindungsgemäß hergestellte Tube, halb in der Ansicht und halb im Längsschnitt.

Eine allgemein mit 1 bezeichnete Spritzformeinheit besteht z.B. aus den beiden Gewindebacken 2 und 3 mit Öffnungskern 4 und dem Tubenkörperformteil 5. Die Teile 2 bis 5 können in Pfeilrichtung A bis D auseinandergefahren und in umgekehrter Richtung zur geschlossenen Form zusammengefahren werden und bilden dann für eine einstückige Tube ein Formnest 6, in das an geeigneter Stelle ein Spritzkanal 7 mündet.

Dabei kann selbstverständlich die mehr schematisch dargestellte Spritzformeinheit auch weiter geteilt sein. Auch ist lediglich zu Gunsten der Übersicht und Klarheit in der Zeichnung eine Formeinheit mit nur einem Formnest dargestellt und das erfindungsgemäße Verfahren am Beispiel derselben nachfolgend beschrieben. Für die praktische Durchführung können selbstverständlich sogenannte Vielfachformen für das gleichzeitige Spritzen mehrerer Tuben in einer Formeinheit verwendet werden.

- 6 -

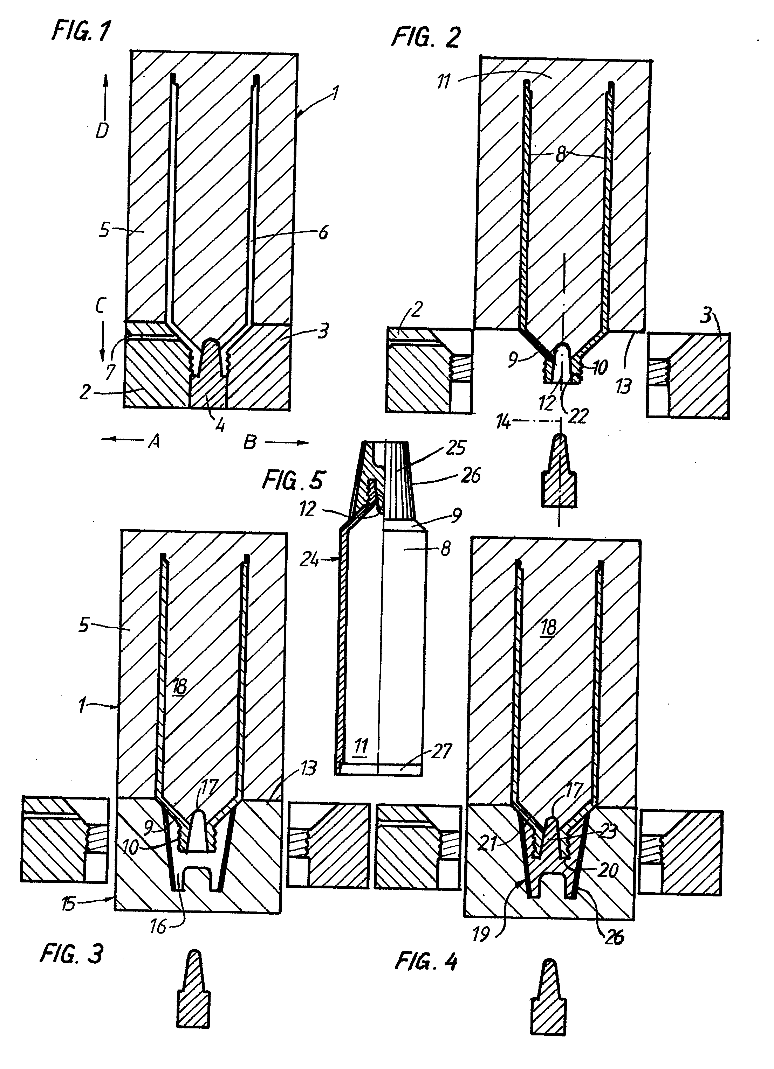

Wenn die Tube mit Tubenkörper 8, konischem Zwischenteil oder Schulter 9 und Gewindehals 10, sowohl am Füllende 11 als auch am Kopfende 12 noch offen, fertig gespritzt ist, werden Körperformteil 5 und Gewindebacken 2 und 3 getrennt, z.B. die beiden Gewindebacken 2 und 3 längs der waagerechten Formtrennebene 13 nach der Seite und der Öffnungskern 4 längs der Formachse 14 gemäß Fig. 2 nach unten weggefahren. Dadurch wird gemäß Fig. 3 Platz frei, um einen weiteren Formteil in Gestalt eines Verschlußkappenformteiles 15 an die Trennebene 13 der Form 1 ansetzen zu können. Dabei spielt es im Rahmen der Erfindung keine Rolle, ob hierzu bei dem in der Zeichnung dargestellten Ausführungsbeispiel der Öffnungskern 4 in der Achse 14 weiter als in der Zeichnung darstellbar zurückgezogen und der Kappenformteil 15 zunächst von der Seite eingefahren und dann angehoben wird, oder ob der Öffnungskern 4 seitlich weggefahren und der Kappenformteil direkt von unten in der Achse 14 eingeschoben wird, oder ob die Gewindebacken 2 und 3 aus der Stellung der Fig. 2 nach oben in Pfeilrichtung D verschoben werden, um Platz für das seitliche Einschwenken des Kappenformteils zu schaffen, oder ob überhaupt ein beweglicher Kappenformteil 15 an einen fixen Tubenkörperformteil 5 angesetzt oder umgekehrt, der Körperformteil zu einem fixen Kappenformteil gefahren wird. Wie die Teile relativ zueinander bewegt werden, kann z.B. davon abhängen, ob der Kappenformteil 15 an den gleichen Spritzkopf, der den Spritzkanal 7 der Backenformteile 2,3 bedient, angeschlossen werden soll, oder ob hierfür, z.B. um eine Kappe anderer Farbe als den Tubenkörper zu spritzen, ein besonderer Spritzkopf benutzt werden soll.

Der Kappenformteil 15 mit seinem Formnest 16 ist eine reine Matritze, besitzt also keinen Kernteil. Kernteil für das Formnest 16 ist vielmehr der Gewindehals 10 der Tube und ein Teil der Schulter oder des konischen Zwischenteils 9. Nur die Mulde 17 im Kernteil 18 des Körperteils 5 der Spritzform 1 ist Gegenform für den Kappenformteil 15.

Der Kappenformteil 15 stützt sich während des Spritzvorganges, für den er wegen des hohen Spritzdruckes mit entsprechend hohem Schließdruck gehalten werden muß, auf der Trennfläche 13 des Tubenkörperformteils 5 ab, so daß er den Tubenkörper selber in keiner Weise verformen kann.

Da der Tubenkörper eine kreisrunde, ovale oder sonstige Querschnittsform aufweisen kann, bedeutet in der Beschreibung "konischer Zwischenteil 9" jener Teil zwischen Tubenrohr und Gewindehals, in dem Gestalt und Durchmesser des Tubenkörperrohres in Gestalt und Durchmesser des Gewindehalses übergeht.

Die Spritzformteile 2,3 und 4 werden sofort nach dem Spritzen des Tubenkörpers vom Formteil 5 getrennt, z.B. weggefahren und der Formteil 15 mit Formnest 16 aufgesetzt, und unmittelbar danach wird durch einen aus Fig. 3 nicht ersichtlichen Spritzkanal die allgemein mit 19 in Fig. 4 bezeichnete Verschlußkappe gespritzt. Weil die Oberfläche des Spritzlings "Tubenkörper" nach dem Spritzen gemäß Fig. 2 völlig glatt ist und der Spritzvorgang für die Kappe sehr schnell vor sich geht, tritt keinerlei gegenseitige schädliche Beeinflussung der Oberflächen und keine Verbindung derselben ein. Vielmehr ist dadurch, daß der Gewindehals 10 der bereits gespritzten Tube den Kern des Formnestes 16 des Kappenformteils 15 abgibt und der auf ihn einwirkende hohe Schließdruck ganz vom Formteil 5 aufgenommen wird, die Gewähr dafür gegeben, daß keine Stauchung, Biegung oder dgl. Verformung des Tubenkörpers erfolgen kann und damit auch jede Verschlußkappe, insbesondere ihr Gewinde, genau zum Gewinde der Tube paßt, was auch für die übrigen aufeinander passenden Dichtflächen gilt.

Da bei der Anwendung des Verfahrens nach der Erfindung Innen- und Außengewinde von Verschlußkappe und Gewindehals ebenso genau zueinander passen wie die Dichtflächen 20 und 21, wird man in vielen Fällen ohne besonderen Dichtkegel auskommen. Hierzu wird man die Entleerungsöffnung 22 der Tube (Fig. 2) zylindrisch oder umgekehrt zur zeichnerisch dargestellten Konizität gestalten, und dann kann der Kernteil 18 des Tubenkörperformteils 5 bis zur Stirnfläche des Gewindehalses reichen und trotzdem nach dem Spritzen gezogen werden.

Für Tuben aber, deren Inhalt stark flüchtige Lösungsmittel enthalten, kann ein Dichtkegel 23 als integraler Bestandteil der Verschlußkappe gespritzt werden, dessen Innenwandung mit Ausnahme seiner Spitze durch die Entleerungsöffnung der vorher gespritzten Tube gebildet wird. Für die Spitze ist die Mulde 17 im Körperformteil 5 bzw. seinem Kernteil 18 vorgesehen.

Fig. 5 stellt die fertige Tube 24 mit Tubenkörper 8, konischem Zwischenstück 9, Gewindehals 10, Füllöffnung 11 und Entleerungsöffnung 12 sowie Schraubkappe 25 dar. Letztere kann zur besseren Handhabung eine Riffelung 26 besitzen. Nach dem Füllen wird die Tube durch eine Schweißnaht 27 verschlossen. Eine nach dem Spritzen einsetzende und wegen der geringen Querschnitte geringe Schrumpfung sorgt dafür, daß bei bestem Sitz sich die Kappe leicht vom Gewindekopf der Tube lösen und wieder aufschrauben läßt.

G 560-Hs
Garmisch-Partenkirchen,
16. Juli 1982
Hs:H

STAHLGRUBER
Otto Gruber GmbH & Co
Einsteinstraße 130
D-8000 München 80

P a t e n t a n s p r ü c h e

1.     Verfahren zur Herstellung einer Tube aus
Kunststoff, bei dem die zugehörige Verschlußkappe
durch Umspritzen des Gewindehalses (10) in einem
mindestens einen Teil des konischen Zwischenstücks
(9) zwischen Tubenkörperrohr (8) und Gewindehals umfassenden Formteil (15) erzeugt wird, in dem der
Gewindehals den Formkern bildet, dadurch   g e -
k e n n z e i c h n e t ,   daß nach dem Spritzen
des Tubenkörpers von dem Gewindehals (10) desselben und mindestens einem Teil des anschließenden
konischen Zwischenstücks (9) der zugehörige Spritzformteil (2,3,4) entfernt und an dessen Stelle ein
Verschlußkappenformteil (15) mit dem übrigen Formkörper (5) zu einer Formeinheit verbunden und anschließend im Kappenformteil in an sich bekannter
Weise direkt um den Gewindehals die Verschlußkappe
(25) mit Innengewinde gespritzt wird.

2.    Verfahren nach dem Anspruch 1, dadurch g e k e n n z e i c h n e t , daß zusammen mit der Verschlußkappe (25) ein integraler Dichtkegel (23) gespritzt wird, dessen Mantel durch die Innenwandung der Entleerungsöffnung (12) des vorher gespritzten Gewindehalses (10) des Tubenkörpers (8) und dessen Spitze durch eine Mulde (17) im Innenteil des Körperformteiles (5) gebildet wird.

3.    Vorrichtung für die Durchführung des Verfahrens nach dem Anspruch 1, dadurch g e k e n n z e i c h n e t , daß die Spritzformteile für den Gewindehals (10) der Tuben verfahrbare Gewindebacken (2,3) sind, und daß an die Trennebene (13), die die Gewindebacken mit dem Tubenkörperformteil (5) bilden, der Verschlußkappenformteil (15) ansetzbar ist.

0073356

1/1

FIG. 1

FIG. 2

FIG. 5

FIG. 3

FIG. 4

| | EINSCHLÄGIGE DOKUMENTE | | EP 82107038.0 |
|---|---|---|---|
| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
| A | GB - B - 1 043 970 (HENRI POPKO)<br>* Fig. 1-6 *<br>-- | 1,2 | B 29 D 23/20 |
| A | DE - B - 1 162 068 (TERESA GUSTI)<br>* Gesamt *<br>-- | 1 | |
| A | US - A - 3 330 006 (C.W. JENKINS)<br>* Fig. 1-3 *<br>-- | 1 | |
| D,A | GB - A - 1 010 541 (HENRI POPKO)<br>---- | | |
| | | | **RECHERCHIERTE SACHGEBIETE (Int. Cl. ³)**<br><br>B 29 B 23/00<br>B 29 D 1/00<br>B 29 F 1/00 |

Der vorliegende Recherchenbericht wurde für alle Patentansprüche erstellt.

| Recherchenort | Abschlußdatum der Recherche | Prüfer |
|---|---|---|
| WIEN | 23-11-1982 | BAUMGARTNER |